# EUROPÄISCHE PATENTSCHRIFT

(11) **EP 0 493 705 B1**
(45) Veröffentlichungstag und Bekanntmachung des Hinweises auf die Patenterteilung: **21.09.1994**
(21) Anmeldenummer: 91121054.0
(22) Anmeldetag: 09.12.1991
(51) Int. Cl.: F01N 3/28, F01N 3/02

(54) **Vorrichtung zur Behandlung von Verbrennungsmotor-Abgasen mit zwei beabstandeten Abgas-Behandlungskörpern**
Apparatus for treating exhaust gases of internal combustion engines with two spaced exhaust treatment bodies
Dispositif de traitement des gaz d'échappement de moteur à combustion interne comprenant deux corps de traitement des gaz espacés l'un de l'autre

(30) Priorität: 31.12.1990 DE 4042266
(43) Veröffentlichungstag der Anmeldung: 08.07.1992
(73) Patentinhaber: Firma J. Eberspächer, 73730 Esslingen (DE)
(72) Erfinder: Wörner, Siegfried, D-7300 Esslingen-Berkheim (DE); Wirth, Georg, Dipl.-Ing., D-73230 Kirchheim (DE); Zacke, Peter, Dr. Ing., D-7321 Albershausen (DE)

(56) Entgegenhaltungen:
- EP-A- 0 129 316
- EP-A- 0 263 893
- EP-A- 0 387 422
- FR-A- 2 454 517

## Beschreibung

Die Erfindung bezieht sich auf eine Vorrichtung zur Behandlung von Verbrennungsmotor-Abgasen mit
- einem längsgeteilten Gehäuse, das aus zwei Teilschalen gebildet ist, die an zwei Längsschweißbordpaaren miteinander verschweißt sind, wobei
- das Gehäuse zwei offene, jeweils an eine Abgasleitung angeschlossene Endbereiche aufweist, von denen der eine der Abgaszufuhr und der andere der Abgasabfuhr dient sowie
- einem Mittelteil, in dem in Durchströmrichtung hintereinander in gegenseitigem Abstand gehalterte durchströmbare Abgasbehandlungskörper angeordnet sind und
- einem Schutzring aus Blech, der den Abstandsraum zwischen den beiden Abgasbehandlungskörpern außen umgrenzt.

Eine derartige Vorrichtung ist aus der DE-OS 36 26 729 für den Fall der katalytischen Abgasentgiftung bekannt. Der Schutzring ist durchgehend rund und mittels einer Halterungsmatte, die auch die beiden Abgas-Behandlungskörper im Gehäuse haltert, im Gehäuse gehaltert. Hierbei zeigt sich das Problem, daß der Schutzring nicht immer und unter allen auftretenden Betriebszuständen sicher gegen Verlagerung oder Schrägstellung gehaltert ist. Außerdem ist eine präzise Montage des Halterungsrings durch Einlegen in eine Teilschale des Gehäuses und anschließendes Aufsetzen und Aufschweißen der zweiten Teilschale zumindest mit einem sehr erheblichen Arbeitsaufwand verbunden.

Demgegenüber ist die Vorrichtung erfindungsgemäß dadurch gekennzeichnet, daß der Schutzring mindestens einen radial nach außen weisenden Blechlappen aufweist, der zwischen ein Schweißbordpaar der Gehäuseteilschalen ragt und dort mit dem Gehäuse verschweißt ist.

Durch die Erfindung wird das Problem gelöst, den Schutzring auf einfache Weise mit präziser Ausrichtung in dem Gehäuse montieren zu können. Der zwischen das Schweißbordpaar ragende Blechlappen sorgt bei der Montage quasi selbsttätig für ein Ausrichten des Schutzrings entsprechend der Längserstreckung des Gehäuses; ein Schrägstellen bzw. Verkanten des Schutzrings ist ausgeschlossen. Außerdem ergibt sich eine sichere Festlegung des Schutzrings in Umfangsrichtung. Durch die Verschweißung des Blechlappens mit dem Gehäuse ist der Schutzring nach der Montage beim Betrieb der Vorrichtung sicher festgelegt und ausgerichtet.

Vorzugsweise weist der Schutzring in Umfangsrichtung beabstandet, vorzugsweise im wesentlichen diametral gegenüberliegend, zwei Blechlappen auf, von denen jeder zwischen einem Schweißbordpaar der Gehäuseteilschalen ragt und dort mit dem Gehäuse verschweißt ist. Diese Maßnahme erleichtert die Montage des Schutzrings noch weiter und macht die Festlegung sowie die Ausrichtung des Schutzrings noch sicherer.

Nach einer bevorzugten Weiterbildung der Erfindung ist (sind) der (die) Blechlappen des Schutzrings in einer Schweißbordpaarvertiefung (in Schweißbordpaarvertiefungen) aufgenommen. Infolge dieser Maßnahme kommt der Schutzring bei der Montage quasi selbsttätig in seine Sollage. Wenn, wie bevorzugt, die Vertiefung (Vertiefungen) eine in Längsrichtung des Gehäuses gemessene Breite haben, die auf die in Längsrichtung des Gehäuses gemessene Blechlappenbreite abgestimmt ist (sind), ergibt sich eine formschlüssige Festlegung des Schutzrings gegenüber Bewegungen in Längsrichtung des Gehäuses. Für jeden Blechlappen kann die Vertiefung entweder in einem oder in beiden

Schweißborden des betreffenden Schweißbordpaars vorhanden sein.

Die Herstellung des Schutzrings gestaltet sich besonders günstig, wenn er aus Zwei in Umfangsrichtung aneinander anschließenden Teil-Schutzringen jeweils mit zwei Teil-Blechlappen an den Enden besteht. Die beiden Teil-Schutzringe können entweder vor der Montage des Schutzringes im Gehäuse miteinander verbunden sein, vorzugsweise durch Punktschweißung, können aber auch erst durch Verschweißen der Teil-Blechlappen mit den Schweißborden zu dem vereinigten Schutzrig werden.

Eine weitere bevorzugte Möglichkeit besteht darin, daß der Schutzring - insbesondere wenn er nur einen Blechlappen aufweist der auch aus zwei Teil-Blechlappen gebildet sein kann - an einer von dem Blechlappen in Umfangsrichtung beabstandeten Stelle formschlüssig mit einem Stutzen für eine Lambda-Sonde in Eingriff ist, der in das Innere des Gehäuses ragt. Die geschilderten Montage- und Festlegungsvorteile infolge des Blechlappens bleiben erhalten. An der vorzugsweise dem Blechlappen im wesentlichen diametral gegenüberliegenden Stelle ergibt sich eine sichere Schutzringfestlegung durch den Eingriff mit dem Stutzen.

Vorzugsweise weist der Schutzring in denjenigen Bereichen, wo kein Blechlappen und gegebenenfalls kein Eingriff mit einem in das Innere des Gehäuses ragenden Stutzen vorhanden ist, eine oder nebeneinander mehrere Sicken auf. Die Sicken müssen, wenn man ihre Länge in Umfangsrichtung betrachtet, nicht bis exakt an den (die) Blechlappen bzw. den Stutzen herangehen, sondern können auch ein Stück vorher enden. Außerdem müssen nicht in allen der genannten Bereiche Sicken vorhanden sein. Die Sicken können nach radial-außen oder nach radial-innen geprägt sein.

Der Schutzring kann in Stirnansicht im wesentlichen dreieckförmig mit abgerundeten Ecken sein und kann zwei Blechlappen an zwei Eckbereichen aufweisen. Alternative Geometrien sind runde Schutzringe oder ovale Schutzringe.

Vorzugsweise sind die zwei Abgas-Behandlungskörper mittels einer durchgehenden Halterungsmatte, vorzugsweise einer Quellmatte, in dem Gehäuse gehaltert und ist für die zwei Übergangsbereiche, wo der Schutzring den beiden Abgas-Behandlungskörpern benachbart ist, eine Silikatgewebelage an der Innenseite der Halterungsmatte vorgesehen.

Die Erfindung und Ausgestaltungen der Erfindung werden nachfolgend anhand von zeichnerisch dargestellten Ausführungsbeispielen noch näher erläutert. Es zeigt:
- Fig. 1: eine Vorrichtung zur Behandlung von Verbrennungsmotor-Abgasen im Längsschnitt;
- Fig. 2: einen Querschnitt der Vorrichtung von Fig. 1 längs II-II
- Fig. 3: eine Seitenansicht eines Details der Vorrichtung von Fig. 1 und 2 gemäß Pfeil III;
- Fig. 4: einen Querschnitt ähnlich Fig. 2 einer weiteren Ausführungsform der Vorrichtung;
- Fig. 5: ein Detail der Vorrichtung von Fig. 4 in teilweise geschnittener Seitenansicht gemäß V-V.

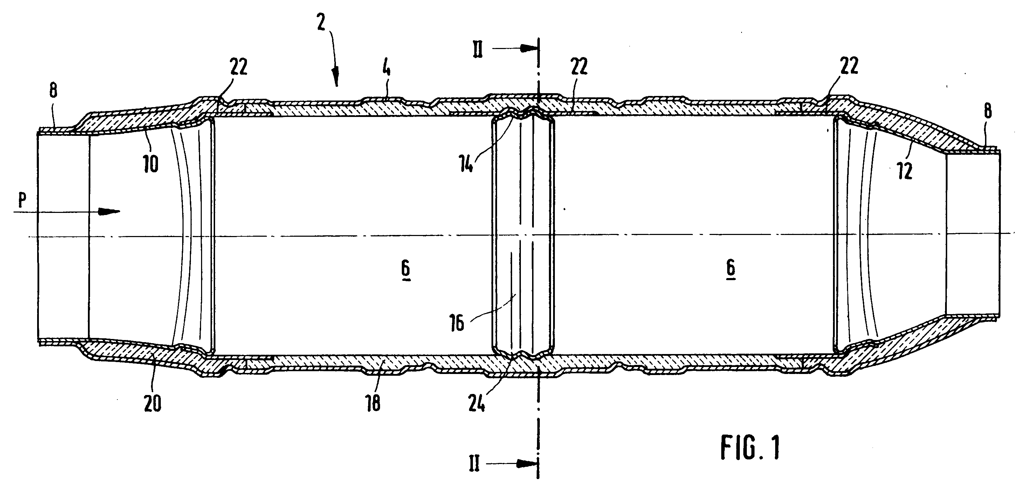

Die in Fig. 1 gezeichnete Vorrichtung 2 weist ein äußeres Gehäuse 4 auf, in dem in Längsrichtung hintereinander zwei Abgas-Behandlungskörper 6 fluchtend und mit gegenseitigem Abstand angeordnet sind. In Fig. 1 links von den Abgas-Behandlungskörpern 6 und rechts von den Abgas-Behandlungskörpern 6 verjüngt sich das Gehäuse jeweils zu einem kreisrunden Endbereich 8. Von dem linken Endbereich 8 aus erstreckt sich ein Einlauftrichter 10 bis kurz vor die linke Stirnseite des linken Abgas-Behandlungskörpers 6. Von dem rechten Endbereich 8 aus erstreckt sich ein Auslauftrichter 12 bis dicht vor die rechte Stirnseite des rechten Abgas-Behandlungskörpers 6.

Der Einlauftrichter 10 und der Auslauftrichter 12 sind jeweils in dem Endbereich 8 an dem Gehäuse befestigt. Im Abstandsraum zwischen der beiden Behandlungskörpern 6 befindet sich ein Schutzring 14 aus Blech, der bis kurz vor die dortigen Stirnseiten der beiden Behandlungskörper 6 reicht. Der Einlauftrichter 10, der Schutzring 14 und der Auslauftrichter 12 haben an ihren einem Behandlungskörper 6 zugewandten Ende eine Größe, die ein wenig kleiner als die Größe des betreffenden Behandlungskörpers 6 ist.

Die Vorrichtung 2 kann an ihren beiden Endbereichen 8 mit einer nicht gezeichneten Abgasleitung verbunden, beispielsweise verschweißt, werden. Die Abgasleitung führt im Betrieb Abgase eines Verbrennungsmotors. In dem Gehäuse besteht eine Durchströmungspassage für eine Abgasströmung entsprechend Pfeil P, die durch den Einlauftrichter 10, den linken Behandlungskörper 6, den Abstandsraum 16, den rechten Behandlungskörper 6 und den Auslauftrichter 12 führt.

Die beiden Behandlungskörper 6 sind mittels einer gemeinsamen, längs durchgehenden Halterungsmatte 18 in dem Gehäuse 4 gehaltert. Die Halterungsmatte ist vorzugsweise eine im Handel erhältliche sog. Quellmatte, die bei zunehmender Temperatur an Volumen zunimmt, um auf diese Weise die Behandlungskörper 6 sicher zu haltern, auch wenn sich im Betrieb wegen der hohen Abgastemperaturen das Gehäuse 4 wesentlich stärker dehnt als die Behandlungskörper 6. Die Halterungsmatte 18 reicht links nicht ganz bis zum linken Ende des linken Behandlungskörpers 6 und rechts nicht ganz bis zum rechten Ende des rechten Behandlungskörpers 6.

Außer im jeweiligen Endbereich 8 besteht zwischen dem Einlauftricher 10 und dem Gehäuse 4 sowie zwischen dem Auslauftrichter 12 und dem Gehäuse 4 ein Ringraum, der jeweils mit einer Isoliermatte 20 ausgefüllt ist. Die Isoliermatten 20 reichen jeweils bis an die Halterungsmatte 18. Die Isoliermatten 20 bestehen beispielsweise aus Keramikfasern.

Im Herstellungszustand besteht zwischen dem rechten Ende des Einlauftrichters und dem linken Ende des linken Behandlungskörpers 6, zwischen dem rechten Ende des linken Behandlungskörpers 6 und dem linken Ende des Schutzrings 14, dem rechten Ende des Schutzrings 14 und dem linken Ende des rechten Behandlungskörpers 6, und dem rechten Ende des rechten Behandlungskörpers 6 und dem linken Ende des Auslauftrichters 12 jeweils ein geringer Abstand. Diese Abstände werden am Umfang durch insgesamt drei Schutzlagen 22 überbrückt. Die Schutzlagen 22 liegen mit ihrer Innenseite am Einlauftrichter 10 bzw. einem Behandlungskörper 6 bzw. dem Schutzring 14 bzw. dem Auslauftrichter 12 an und sind an ihrer Außenseite von der betreffenden Isoliermatte 20 bzw. der Halterungsmatte 18 umfaßt und dadurch nach innen gegen die beschriebenen Bestandteile der Vorrichtung gedrückt. Die mittlere Schutzlage 22 überbrückt sowohl den Spalt links des Schutzringes 14 als auch den Spalt rechts des Schutzrings 14. Die Schutzlagen 22 bestehen vorzugsweise aus Silikatgewebe.

Der Schutzring 14 hat zwei radial nach außen geprägte, parallel zueinander umlaufende Sicken 24. Die Sicken 24 versteifen den Schutzring 14, und die im Längsschnitt gewellte Außenkontur ist einer sichereren Halterung gegenüber Axialbewegungen mittels der Halterungsmatte 18 dienlich.

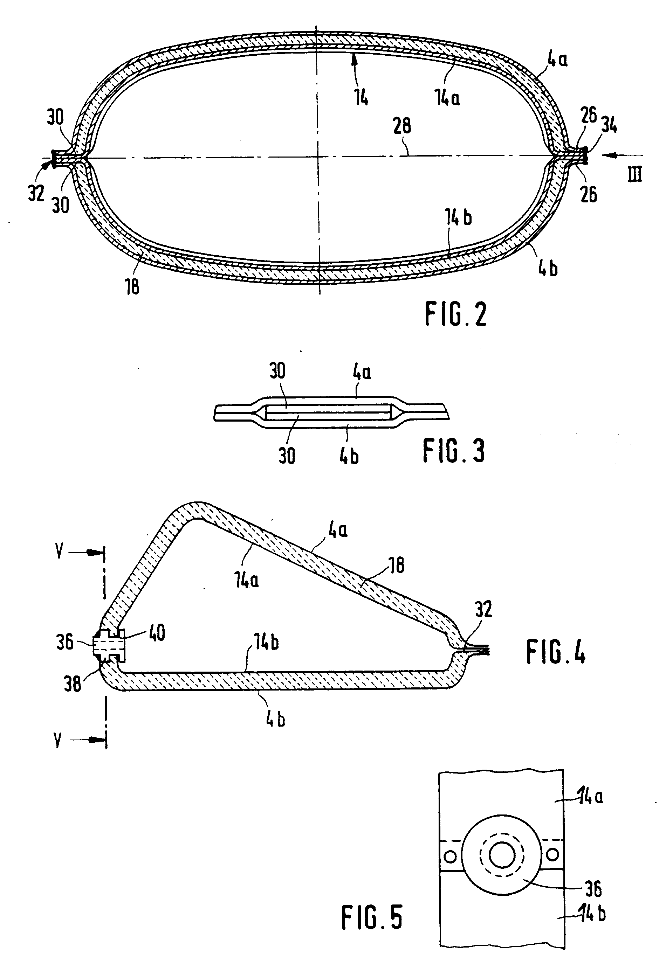

In Fig. 2 erkennt man, daß das Gehäuse 4, der Schutzring 14 und die beiden Behandlungskörper 6 im Querschnitt ovalförmig sind. Es kommen aber auch andere Querschnittsgeometrien in Betracht, insbesondere kreisrund, dreieckförmg mit abgerundeten Ecken (Fig. 4). In Fig. 2 erkennt man ferner, daß das Gehäuse aus einer oberen Gehäuse-Teilschale 4a und einer unteren Gehäuse-Teilschale 4b besteht. Jede der Gehäuse-Teilschalen 4a und 4b hat - in der Blickrichtung der Fig. 2 - jeweils links und rechts einen nach außen abgebogenen Schweißbord 26. Der Schutzring 14 ist aus einem oberen Teil-Schutzring 14a und einem unteren Teil-Schutzring 14b zusammengesetzt. Jeder der beiden TeilSchutzringe 14a und 14b weist im wesentlichen in der Teilungsebene 28 des Gehäuses 4 einen nach außen abgebogenen Teil-Blechlappen 30 auf.

Rechts in Fig. 2 sind die beiden Teil-Blechlappen 30 der beiden Teil-Schutzringe 14a und 14b zu einem Blechlappen 32 punktverschweißt. Das Gleiche gilt für die linke Schutzringseite. In demjenigen Bereich, wo sich der Schutzring 14 befindet, weisen die Schweißborde 26 der oberen Gehäuse-Teilschale 4a eine durch Ausbiegen nach oben erzeugte, lokale Vertiefung auf. In diesem Bereich weisen die Schweißborde 26 der unteren Gehäuse-Teilschale 4b eine durch Ausbiegen nach unten erzeugte, lokale Vertiefung auf. Auf diese Weise ist zwischen dem linken Schweißbordpaar 26 und dem rechten Schweißbordpaar 26 dort ein taschenartiger Raum entstanden, der den betreffenden Blechlappen 32 aufnimmt. Der Blechlappen 32 reicht jeweils so weit nach außen wie das Schweißbordpaar. Nach dem Zusammenbau der Vorrichtung werden die Gehäuse-Teilschalen 4a, 4b und der Schutzring 14 längs der Schweißbordpaare 26 miteinander verschweißt, wie mit den Schweißraupen 34 angedeutet. In Fig. 3 ist der Zustand vor dem Verschweißen gezeigt. In Fig. 2 ist aus übersichtsgründen die Schutzlage 22 weggelassen. Unten in Fig. 1 ist angedeutet, daß man die Vorrichtung 2 auch ohne die mittlere, dem Schutzring 14 zugeordnete Schutzlage 22 bauen kann. Die Sicken 24 laufen kurz vor den Teil-Blechlappen 30 aus, so daß die Teil-Blechlappen 30 eben sind.

Insbesondere bei Vorrichtungen 2 mit relativ kleinem Querschnitt und/oder mit rundem Querschnitt kann man auch mit einem Schutzring 14 arbeiten, der nur einseitig einen Blechlappen 32 aufweist.

In Fig. 4 und 5 ist eine Ausführungsform gezeichnet, bei der die Vorrichtung eine im Querschnitt dreieckförmige Konfiguration mit abgerundeten Ecken hat. Der Schutzring 14 hat nur einseitig einen Blechlappen 32, der wiederum aus zwei Teil-Blechlappen 30 gebildet ist. Im wesentlichen diametral gegenüberliegend dem Blechlappen 30 ist der Schutzring 14 formschlüssig mit einem Stutzen 36 in Eingriff, der das Gehäuse 4, die Halterungsmatte 18 und den Schutzring 14 durchsetzend in das Innere des Gehäuses 4 ragt. Der Stutzen 36, der außen mit dem Gehäuse 4 ringförmig verschweißt ist, dient dem Einsetzen einer in den Abstandsraum 16 ragenden, nicht eingezeichneten Lambda-Sonde. Von innen her an das Gehäuse 4 anliegend besitzt der Stutzen 36 einen Ringvorsprung 38. Innenseitig neben dem Rinsvorsprung 38 ist im Außenumfang des Stutzens 36 eine Ringnut 40 vorgesehen, mit der der Schutzring 14 in Eingriff ist.

In Fig. 5 ist die Möglichkeit gezeichnet, daß der Schutzring 14 aus einem oberen Teil-Schutzring 14a und einem unteren Teil-Schutzring 14b zusammengesetzt ist. Im Bereich des Stutzens 36 überlappen sich die beiden Teil-Schutzringe 14a und 14b ein Stück weit in Umfangsrichtung und sind beidseitig neben dem Stutzen 36 punktverschweißt. Alternativ ist es möglich, den Schutzring 14 dort einstückig durchgehen zu lasen und ihn mit einer dortigen Öffnung, die einen umgebogenen, federnd nachgiebigen Rand aufweist, in die Ringnut 40 einzuschnappen.

Es wird darauf hingewiesen, daß die im wesentlichen dreieckförmige Vorrichtungskonfiguration gemäß Fig. 4 auch mit zwei Schweißbordpaaren 26 und mit Festlegung des Schutzringes 14 mittels zweier Blechlappen 32, die eingeschweißt sind wie im Zusammenhang mit Fig. 2 beschrieben, verwirklichbar ist.

Aus der vorstehenden Beschreibung ist deutlich, daß der Schutzring 14 in besonders einfacher Weise positionsgenau in den Gehäuse-Teilschalen 4a und 4b montiert und mit diesen verbunden werden kann. Infolge der Wärmeleitfähigkeit des Schutzrings 14 kommt die Quellmatte 18 auf genügend hohe Temperatur, um an Volumen zuzunehmen und den Schutzring 14 auch dann sicher zu halten, wenn sich das Gehäuse 4 dehnt. Der durch Sicken versteifte und mit dem Gehäuse 4 verschweißte Schutzring 14 neigt nicht zu Schwingungen. Wenn gewünscht, kann der Schutzring 14 mit dem Stutzen 36 verschweißt werden.

Die Abgas-Behandlungskörper 6 sind beispielsweise keramische Monolithe mit Längskanälen und katalytischer Beschichtung, um in der Vorrichtung 2 eine Oxidation von im Abgas vorhandenen Kohlenwasserstoffen und Kohlenmonoxid sowie eine Reduktion von im Abgas vorhandenen Stickoxiden zu erreichen. Die Abgas-Behandlungskörper 6 können aber auch keramische oder anders aufgebaute Rußfilter für Dieselmotoren-Abgase sein.

## Patentansprüche

1. Vorrichtung zur Behandlung von Verbrennungsmotor-Abgasen mit
- einem längsgeteilten Gehäuse (4), das aus zwei Teilschalen (4a, 4b) gebildet ist, die an zwei Längsschweißbordpaaren (26) miteinander verschweißt sind, wobei
- das Gehäuse (4) zwei offene, jeweils an eine Abgasleitung angeschlossene Endbereiche (8) aufweist, von denen der eine der Abgaszufuhr und der andere der Abgasabfuhr dient sowie
- einem Mittelteil, in dem in Durchströmrichtung hintereinander in gegenseitigem Abstand gehalterte durchströmbare Abgasbehandlungskörper (6) angeordnet sind und
- einem Schutzring (14) aus Blech, der den Abstandsraum zwischen den beiden Abgasbehandlungskörpern (6) außen umgrenzt,
dadurch gekennzeichnet, daß
der Schutzring (14) mindestens einen radial nach außen weisenden Blechlappen (32) aufweist, der zwischen ein Schweißbordpaar (26) der Gehäuseteilschalen (4a, 4b) ragt und dort mit dem Gehäuse (4) verschweißt ist.

2. Vorrichtung nach Anspruch 1, dadurch gekennzeichnet, daß der Schutzring (14) in Umfangsrichtung beabstandet zwei Blechlappen (32) aufweist, von denen jeder zwischen ein Schweißbordpaar (26) der Gehäuse-Teilschalen (4a, 4b) ragt und dort mit dem Gehäuse (4) verschweißt ist.

3. Vorrichtung nach Anspruch 1 oder 2, dadurch gekennzeichnet, daß der (die) Blechlappen (32) des Schutzringes (14) in einer Schweißbordpaar-Vertiefung (in Schweißbordpaar-Vertiefungen) aufgenommen ist (sind).

4. Vorrichtung nach Anspruch 2 oder 3, dadurch gekennzeichnet, daß der Schutzring (14) aus zwei in Umfangsrichtung aneinander anschließenden Teil-Schutzringen (14a, 14b) jeweils mit zwei Teil-Blechlappen (30) an den Enden besteht.

5. Vorrichtung nach Anspruch 4, dadurch gekennzeichnet, daß die zwei Teil-Schutzringe (14a, 14b) durch Verbinden von je zwei Teil-Blechlappen (30) miteinander verbunden sind, vorzugsweise durch Punktverschweißung.

6. Vorrichtung nach einem der Ansprüche 1 bis 5, dadurch gekennzeichnet, daß der Schutzring (14) an einer von dem (den) Blechlappen (32) in Umfangsrichtung beabstandeten Stelle formschlüssig mit einem Stutzen (36) für eine Lambda-Sonde in Eingriff ist, der in das Innere des Gehäuses (4) ragt.

7. Vorrichtung nach einem der Ansprüche 1 bis 6, dadurch gekennzeichnet, daß der Schutzring (14) in den Bereichen, wo kein Blechlappen (32) und kein Eingriff mit einem in das Innere des Gehäuses (4) ragenden Stutzen (36) vorhanden ist, eine oder nebeneinander mehrere Sicken (24) aufweist.

8. Vorrichtung nach einem der Ansprüche 1 bis 7, dadurch gekennzeichnet, daß der Schutzring (14) in Stirnansicht im wesentlichen dreieckförmig mit abgerundeten Ecken ist.

9. Vorrichtung nach einem der Ansprüche 1 bis 8, dadurch gekennzeichnet, daß die zwei Abgas-Behandlungskörper (6) mittels einer durchgehenden Halterungsmatte (18), vorzugsweise einer Quellmatte, in dem Gehäuse (4) gehaltert sind; und daß für die zwei Übergangsbereiche, wo der Schutzring (14) den beiden Abgas-Behandlungskörpern (6) benachbart ist, eine Silikatgewebelage (22) an der Innenseite der Halterungsmatte (18) vorgesehen ist.

## Claims

1. Apparatus for treating exhaust gases of internal combustion engines, having
- a longitudinally divided housing (4) which is formed from two part shells (4a, 4b) which are welded to one another at two longitudinal welding edge pairs (26),
- the housing (4) having two open end regions (8) which are each connected to an exhaust gas line and of which the one serves to supply exhaust gas and the other to discharge exhaust gas, and having
- a central part in which exhaust gas treatment bodies (6) which can be flowed through and which are mounted mutually spaced behind one another as seen in the direction of flowing through are arranged, and
- a protective ring (14) of sheet metal which externally delimits the clearance space between the two exhaust gas treatment bodies (6),
characterized in that
the protective ring (14) has at least one radially outwardly pointing sheet-metal tab (32) which projects between a welding edge pair (26) of the housing part shells (4a, 4b) and is welded to the housing (4) there.

2. Apparatus according to Claim 1, characterized in that the protective ring (14) has spaced in the peripheral direction two sheet-metal tabs (32), of which each projects between a welding edge pair (26) of the housing part shells (4a, 4b) and is welded to the housing (4) there.

3. Apparatus according to Claim 1 or 2, characterized in that the sheet-metal tab(s) (32) of the protective ring (14) is (are) received in a welding edge pair depression (in welding edge pair depressions).

4. Apparatus according to Claim 2 or 3, characterized in that the protective ring (14) comprises two protective part rings (14a, 14b) adjacent to one another in the peripheral direction and each having two part sheet-metal tabs (30) at the ends.

5. Apparatus according to Claim 4, characterized in that the two protective part rings (14a, 14b) are connected to one another by the connection of in each case two part sheet-metal tabs (30), preferably by spot welding.

6. Apparatus according to one of Claims 1 to 5, characterized in that the protective ring (14) is in form-fitting engagement, at a point spaced from the sheet-metal tab(s) (32) in the peripheral direction, with a conduit (36) for a lambda probe which projects into the interior of the housing (4).

7. Apparatus according to one of Claims 1 to 6, characterized in that the protective ring (14) has one or more beads (24) next to one another in the regions where there is no sheet-metal tab (32) and no engagement with a conduit (36) projecting into the interior of the housing (4).

8. Apparatus according to one of Claims 1 to 7, characterized in that the protective ring (14), in end view, is substantially triangular with rounded corners.

9. Apparatus according to one of Claims 1 to 8, characterized in that the two exhaust gas treatment bodies (6) are mounted in the housing (4) by means of a continuous mounting mat (18), preferably a swelling mat; and in that a silicate textile layer (22) is provided on the inside of the mounting mat (18) for the two transition regions where the protective ring (14) is adjacent to the two exhaust gas treatment bodies (6).

## Revendications

1. Dispositif de traitement des gaz d'échappement de moteurs à combustion interne comprenant :
- un carter (4) divisé longitudinalement en deux demi-coques (4a, 4b) qui sont soudées entre elles par deux paires de bords de soudure longitudinaux (26), sachant que
- le carter (4) présente deux zones d'extrémité ouvertes (8) reliées chacune à une conduite de gaz d'échappement, dont l'une sert à amener les gaz d'échappement et l'autre à les évacuer, et comprenant également
- une partie centrale dans laquelle des corps de traitement des gaz d'échappement (6) maintenus de façon espacée l'un de l'autre et pouvant être parcourus par les gaz d'échappement sont disposés l'un derrière l'autre dans la direction de circulation et
- une bague de protection (14) en tôle qui entoure l'espace entre les deux corps de traitement des gaz d'échappement (6) par l'extérieur,
caractérisé en ce que la bague de protection (14) présente au moins une languette en tôle (32) pointant radialement vers l'extérieur qui fait saillie entre deux bords de soudure longitudinaux (26) des demi-coques du carter (4a, 4b) et est soudée à cet endroit au carter (4).

2. Dispositif selon la revendication 1, caractérisé en ce que la bague de protection (14) présente deux languettes en tôle (32) espacées l'une de l'autre dans la direction du pourtour, dont chacune fait saillie entre une paire de bords de soudure (26) des demi-coques du carter (4a, 4b) et est soudée à cet endroit au carter (4).

3. Dispositif selon la revendication 1 ou 2, caractérisé en ce que la (les) languette(s) en tôle (32) de la bague de protection (14) est (sont) logée(s) dans un renfoncement de la paire de bords de soudure (des renfoncements de la paire de bords de soudure).

4. Dispositif selon la revendication 2 ou 3, caractérisé en ce que la bague de protection (14) est composée de deux parties de bague de protection (14a, 14b) se raccordant l'une à l'autre dans la direction du pourtour et comportant deux parties de languette en tôle (30) à chaque extrémité.

5. Dispositif selon la revendication 4, caractérisé en ce que les deux parties de la bague de protection (14a, 14b) sont reliées entre elles en assemblant chaque fois deux parties de languette en tôle (30), de préférence par soudure par points.

6. Dispositif selon l'une des revendications 1 à 5, caractérisé en ce que. en un endroit qui est éloigné de la (des) languette(s) en tôle (32) dans la direction du pourtour, la bague de protection (14) est en prise avec un engagement positif avec un manchon (36) pour une sonde lambda qui fait saillie à l'intérieur du carter (4).

7. Dispositif selon l'une des revendications 1 à 6, caractérisé en ce que la bague de protection (14) présente un ou plusieurs bourrelets (24) disposés côte à côte dans les zones où il n'y a ni languette en tôle (32) ni prise avec un manchon (36) faisant saillie à l'intérieur du carter (4).

8. Dispositif selon l'une des revendications 1 à 7, caractérisé en ce que la bague de protection (14) vue de face est essentiellement triangulaire et présente des angles arrondis.

9. Dispositif selon l'une des revendications 1 à 8, caractérisé en ce que les deux corps de traitement des gaz d'échappement (6) sont maintenus dans le carter (4) au moyen d'une natte de maintien continue (18), de préférence d'une natte gonflante, et en ce que pour les deux zones de transition où la bague de protection (14) est adjacente aux deux corps de traitement des gaz d'échappement (6), une couche de toile silicatée (22) est prévue sur le côté intérieur de la natte de maintien (18).
